# EUROPEAN PATENT APPLICATION

(11) **EP 4 819 592 A1**
(43) Date of publication of application: **07.10.2026**
(21) Application number: 25214849.9
(22) Date of filing: 11.11.2025
(51) Int. Cl.: H04M 1/23, H04M 1/02, H04M 1/18

(54) **ELECTRONIC DEVICE WITH SIDE BUTTON**

(30) Priority: 31.03.2025 CN 202510397995
(71) Applicant: Beijing Zitiao Network Technology Co., Ltd., Beijing 100190 (CN)
(72) Inventor: XIE, Chun, Beijing 100028 (CN)
(74) Representative: Isarpatent

(57) **Abstract**

An intelligent terminal is provided, including a housing (1), a back cover (2), a flexible printed circuit (FPC) assembly; and a button assembly (4). The back cover (2) is arranged at a bottom of the housing (1) and is sealingly connected with the housing (1); the housing (1) defines a button penetration hole (11) for the button assembly (4) to extend into on its outer periphery, and an accommodating groove (12) for accommodating the FPC assembly (3) on its inner periphery, and the accommodating groove (12) is in communication with the button penetration hole (11). By forming the accommodating groove (12) in the inner peripheral side of the housing (1), the sealing connection between the housing (1) and the back cover (2) is not affected, the waterproof effect is ensured, and the FPC assembly (3) is prevented from occupying the space inside the housing (1), and the FPC assembly (3) may be installed from the inner peripheral side of the housing (1), and no mounting hole is required to be reserved in the bottom of the housing (1), so that the width of the housing (1) in the axial direction of the button penetration hole (11) may be reduced, thereby reducing the size of the intelligent terminal in the axial direction of the button penetration hole (11) and improving the user experience.

## Description

This application claims priority to Chinese Patent Application No. 202510397995.8 filed on March 31, 2025, the disclosure of which is incorporated herein by reference in its entirety as part of the present application.

### TECHNICAL FIELD

The present application relates to the technical field of electronic products, and in particular, to an intelligent terminal.

### BACKGROUND

With the widespread use of mobile phones in daily life, the mobile phone not only has a basic communication function, but also has functions such as photographing, video recording, games, music playing, and the like. With the increasing functions of the mobile phone, side buttons of the mobile phone are also widely used, for example, for volume adjustment, taking pictures, and the like.

At present, a commonly used side button structure is usually a cooperation of a button and an FPC assembly, and the button presses and triggers the FPC assembly when being pressed, thereby achieving a button function. A screen is arranged at the top of a middle frame of the mobile phone, and a battery cover is arranged at the bottom of the middle frame. A button slot is formed in the outer peripheral side of the middle frame, and in order to fix the FPC assembly, a mounting hole is formed in the bottom of the middle frame. The bottom of the middle frame is also bonded to the battery cover to achieve the bonding of the middle frame and the battery cover and the waterproof sealing. However, due to the arrangement of the mounting hole, the bonding width between the top of the middle frame and the battery cover is reduced at the mounting hole. In order to meet the waterproof requirement, the width of the middle frame usually needs to be increased, which leads to an increase in the width of the mobile phone and poor user experience.

### SUMMARY

Embodiments of the present disclosure provide an intelligent terminal, comprising: a housing, a back cover, which is arranged at a bottom of the housing and is sealingly connected with the housing; an flexible printed circuit (FPC) assembly; and a button assembly, wherein the housing defines a button penetration hole for the button assembly to extend into on its outer periphery, and an accommodating groove for accommodating the FPC assembly on its inner periphery, and the accommodating groove is in communication with the button penetration hole.

In at least an embodiment, the housing further defines a mounting groove in communication with the accommodating groove on its inner periphery to allow the FPC assembly to be mounted into the accommodating groove through the mounting groove.

In at least an embodiment, the mounting groove and the accommodating groove form a stepped groove; the intelligent terminal further comprises a limiting piece connected to the housing, and the limiting piece is arranged in the mounting groove to limit the FPC assembly.

In at least an embodiment, a locking piece with a locking hole or a locking hole is arranged in the housing, a through hole is formed in the limiting piece, and the housing and the limiting piece are fixed by a fastener passing through the through hole and extending into the locking hole.

In at least an embodiment, the intelligent device further comprises a button bracket, the button bracket is arranged in the accommodating groove, and a limiting cavity for limiting the FPC assembly is arranged in the button bracket.

In at least an embodiment, the button bracket comprises a bracket body and a buffer piece arranged on the bracket body, and the bracket body and the buffer piece enclose to form the limiting cavity, and the buffer piece is located on one side of the FPC assembly close to the button penetration hole.

In at least an embodiment, the FPC assembly comprises an FPC body and a trigger elastic piece arranged on the FPC body; in a natural state, the trigger elastic piece abuts against the buffer piece or is spaced from the buffer piece by a preset distance.

In at least an embodiment, the bracket body and the buffer piece are in an integrated structure.

In at least an embodiment, the intelligent device further comprises a limiting piece, and the limiting piece presses against the bracket body 51 to form a space for accommodating the FPC assembly.

In at least an embodiment, the intelligent terminal further comprises a screen, and the screen is arranged at a top of the housing and is sealingly connected with the housing; the housing, the screen and the back cover enclose to form an accommodating space.

In at least an embodiment, the button assembly comprises a button body slidably arranged on the housing and a button needle body sealingly arranged in the button penetration hole, and the button body is configured to drive the button needle body to move in the button penetration hole to trigger the FPC assembly when being pressed.

In at least an embodiment, the housing further defines a button mounting groove in its outer periphery, and the button mounting groove is in communication with the button penetration hole, and the button body is arranged in the button mounting groove, and partially extends out of the button mounting groove.

In at least an embodiment, the FPC assembly is configured to be mounted into the accommodating groove from an inner side of the housing, which is different from a side where the rear cover is located.

In at least an embodiment, the intelligent terminal is a mobile phone.

### BRIEF DESCRIPTION OF DRAWINGS

The drawings herein, which are incorporated in and constitute a part of this specification, illustrate embodiments consistent with the present application and, together with the description, serve to explain the principles of the present application.

In order to more clearly explain the technical solutions in the embodiments of the present application or in the prior art, the following will briefly introduce the drawings that need to be used in the description of the embodiments or the prior art. Obviously, for those of ordinary skill in the art, other drawings may be obtained based on these drawings without paying creative efforts.
Fig. 1 is a schematic partial cross-sectional view of an intelligent terminal in the prior art;
Fig. 2 is a schematic diagram of a partial structure of an intelligent terminal according to an embodiment of the present application;
Fig. 3 is a schematic structural diagram of a housing according to an embodiment of the present application;
Fig. 4 is an exploded schematic diagram of Fig. 2;
Fig. 5 is a schematic cross-sectional view of Fig. 2.

Reference numerals:
middle frame; 11', mounting hole; 2', battery cover; 3', FPC assembly; 4', screen; 5', button; 1, housing; 11, button penetration hole; 12, accommodating groove; 13, mounting groove; 14, clamping piece mounting groove; 15, buckle hole; 16, button mounting groove; 2, back cover; 3, FPC assembly; 31, FPC body; 32, trigger elastic piece; 4, button assembly; 41, button body; 411, buckle; 42, button needle body; 5, button bracket; 5a, limiting cavity; 51, bracket body; 52, buffer piece; 6, limiting piece; 7, fastener; 8, locking piece; 81, locking hole; 9, clamping piece.

### DETAILED DESCRIPTION

In order to understand the above objects, features and advantages of the present application more clearly, the solutions of the present application will be further described below. It should be noted that, in case of no conflict, the features in one embodiment or in different embodiments may be combined.

Many specific details are set forth in the following description to fully understand the present application, but the present application may also be implemented in other ways different from those described herein. Obviously, the described embodiments are part of the embodiments of the present application, but not all of the embodiments.

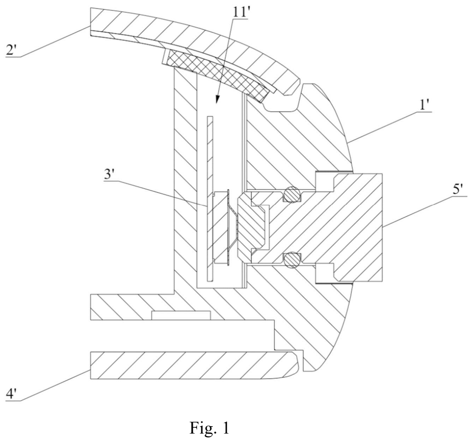

Referring to Fig. 1, in the related art, a commonly used side button structure is usually a cooperation between a button 5' and an FPC assembly 3', and the FPC assembly is triggered when the button 5' is pressed. A screen 4' is arranged at the top of a middle frame 1' of a mobile phone, and a battery cover 2' is arranged at the bottom of the middle frame 1'. A button slot for accommodating the button 5' is formed in the outer periphery of the middle frame 1', and in order to fix the FPC assembly 3', a mounting hole 11' is formed in the bottom of the middle frame 1'. Since the battery cover 2' is connected to the middle frame 1' by bonding, a certain bonding area needs to be ensured in order to ensure the waterproof strength. However, the arrangement of the mounting hole 11' reduces the bonding area between the middle frame 1' and the battery cover 2' at the mounting hole 11', which affects the waterproof effect. In this way, the width of the middle frame 1' needs to be increased to ensure the bonding area, which leads to an increase in the width of the mobile phone and affects the user experience.

Specifically, referring to Fig. 1, the bottom of the middle frame 1' may be divided into a first area and a second area, the second area is closer to the outer peripheral side of the middle frame 1' than the first area, the first area is provided with a bonding surface for bonding with the battery cover 2', and the second area or the junction of the first area and the second area is provided with a clamping piece mounting groove for accommodating a clamping piece clamped with the button 5'. The mounting hole 11' is formed in the first area, which affects the width of the bonding surface in the sliding direction of the button 5'. Therefore, in order to ensure the width of the bonding surface to ensure the waterproof effect, the width of the first area needs to be increased, resulting in an increase in the size of the mobile phone.

Therefore, in order to solve the above problems, an embodiment of the present application provides an intelligent terminal, which may be an electronic device with a side button, such as a mobile phone, a tablet, etc., which is not specifically limited herein. The side button means that the button is located on one side of the intelligent terminal in the width direction, for example, when the intelligent terminal is a mobile phone, the left side of the mobile phone has a volume up button and a volume down button, and the right side is provided with a power button, and the power button is used to control the turning on and off of the mobile phone screen. Certainly, the side button may also be understood as that the button is located on one side of the intelligent terminal in the length direction, for example, the switch button of the tablet is located on one side of the tablet in the length direction, and in this situation, the power button is located at the top or bottom of the tablet.

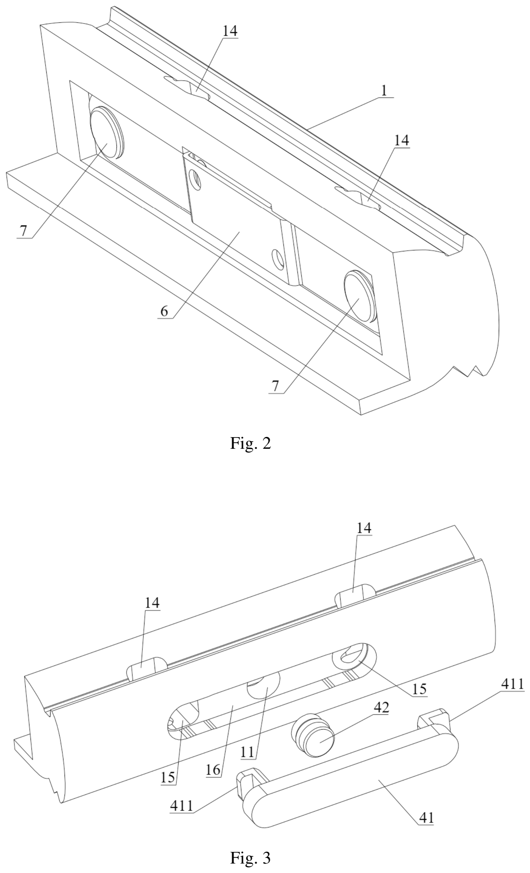

Specifically, referring to Fig. 2 to Fig. 4, the intelligent terminal includes a housing 1, a back cover 2, an flexible printed circuit (FPC) assembly 3 and a button assembly 4. The back cover 2 is arranged at the bottom of the housing 1 and is sealingly connected with the housing 1. The housing 1 defines a button penetration hole 11 for the button assembly 4 to extend into on its outer periphery and an accommodating groove 12 for accommodating the FPC assembly 3 in its inner periphery, and the accommodating groove 12 is in communication with the button penetration hole 11.

It may be understood that, the back cover 2 is arranged at the bottom of the housing 1 and is connected with the housing 1 in a sealing manner, the button penetration hole 11 is formed in the outer peripheral side of the housing 1, and the accommodating groove 12 for accommodating the FPC assembly 3 is formed in the inner peripheral side of the housing 1, and the accommodating groove 12 is in communication with the button penetration hole 11. In this way, by forming the accommodating groove 12 in the inner peripheral side of the housing 1, the sealing connection between the housing 1 and the back cover 2 is not affected, the waterproof effect is ensured, and the FPC assembly 3 is prevented from occupying the space inside the housing 1, so that the width of the housing 1 in the axial direction of the button penetration hole 11 may be reduced, thereby reducing the size of the intelligent terminal in the axial direction of the button penetration hole 11 and improving the user experience.

Moreover, the FPC assembly 3 is mounted into the accommodating groove 12 from the inner peripheral side of the housing 1, i.e., from a side different from a side where the rear cover 2 is located, so that the bonding area between the housing 1 and the back cover 2 may be reduced while ensuring the sealing effect between the housing 1 and the back cover 2. Specifically, compared with reserving a mounting hole in the bottom of the housing 1, there is no need to increase the bonding area between the housing 1 and the back cover 2, so that the waste of the bonding area may be reduced while ensuring the sealing effect. The back cover 2 is not exposed through the accommodating groove 12.

It should be noted that, the back cover 2 is bonded to the bottom of the housing 1, and the accommodating groove 12 is arranged in the inner peripheral wall of the housing 1, and the accommodating groove 12 does not affect the area of the bottom of the housing 1 bonded to the back cover 2, thereby ensuring the bonding area between the housing 1 and the back cover 2, meeting the waterproof requirement and reducing the size of the intelligent terminal.

The button assembly 4 may be arranged at one end of the intelligent terminal in the length direction or at one end of the intelligent terminal in the width direction. For example, taking the intelligent terminal as a mobile phone for an example, the button assembly 4 is located at one end of the mobile phone in the width direction, and in this situation, the housing 1 may be a middle frame of the mobile phone, and the mobile phone further includes a back cover 2 and a screen, the back cover 2 is arranged at the bottom of the middle frame and is connected with the middle frame by bonding, and the screen is arranged at the top of the middle frame and is connected with the middle frame by bonding. The accommodating groove 12 is arranged on the inner peripheral side of the middle frame, and the button penetration hole 11 is arranged on the outer peripheral side of the middle frame, so that the accommodating groove 12 is prevented from affecting the bonding area between the middle frame and the back cover 2, the width of the middle frame may be reduced, and the width of the mobile phone may be further reduced. Certainly, the button assembly 4 may also be located on one side of the mobile phone in the length direction, and in this situation, the length of the mobile phone may be reduced.

Further, the intelligent terminal further includes a screen (not shown in the figure), the screen is arranged at the top of the housing 1 and is connected with the housing 1 in a sealing manner, and the housing 1, the screen and the back cover 2 enclose to form an accommodating space.

It should be noted that, the housing 1 may be a middle frame, and the middle frame is presented as an annular structure, and in this situation, the screen may be configured as a front cover of the intelligent terminal. The housing 1 may also be a housing with an inner cavity, and in this situation, the back cover 2 is connected to the housing 1, and the screen is arranged on the housing 1. Alternatively, the housing 1 and the screen form a U-shaped structure, and the back cover 2 is also a U-shaped structure, and in this situation, the two U-shaped structures enclose to form the accommodating space, and the side wall of each U-shaped structure is connected to the middle wall of another U-shaped structure.

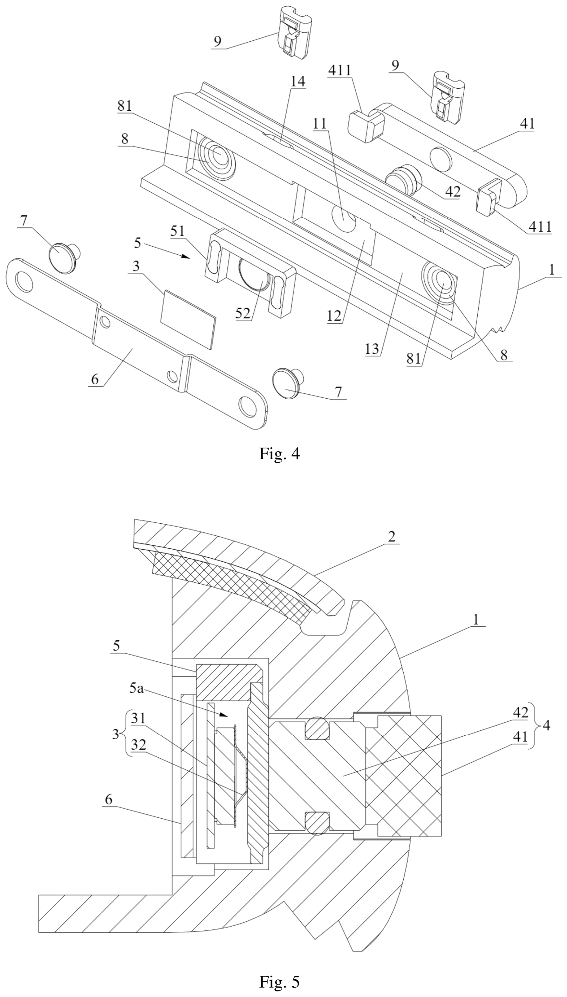

Referring to Fig. 3 and Fig. 4, the button assembly 4 includes a button body 41 slidably arranged on the housing 1 and a button needle body 42 sealingly arranged in the button penetration hole 11, and the button body 41 drives the button needle body 42 to move in the button penetration hole 11 to trigger the FPC assembly 3 when being pressed.

It may be understood that, the button needle body 42 is sealingly arranged in the button penetration hole 11 and is capable of moving in the button penetration hole 11, so that the waterproof effect may be ensured while achieving the button function, thereby preventing liquid or water vapor from entering the inner space of the housing 1 through the button penetration hole 11.

Multiple button assemblies 4 may be arranged, and multiple FPC assemblies 3 are correspondingly arranged. In this case, the housing 1 is provided with a button penetration hole 11 corresponding to each button assembly 4, and is provided with an accommodating groove 12 corresponding to each FPC assembly 3.

Further, a buckle 411 is arranged on the button body 41, and a buckle hole 15 for the buckle 411 to extend into is formed in the outer peripheral side of the housing 1. A clamping piece mounting groove 14 is arranged in the bottom of the housing 1, and a clamping piece 9 is arranged in the clamping piece mounting groove 14, the buckle hole 15 is in communication with the clamping piece mounting groove 14, the buckle 411 is capable of extending into the clamping piece mounting groove 14 through the buckle hole 15, and the clamping piece 9 is capable of limiting the buckle 411 when the button body 41 moves in a direction away from the FPC assembly 3. That is, in a natural state, the button body 41 is in an initial position, and in this situation, the clamping piece 9 limits the buckle 411. When the button body 41 is pressed to move in a direction close to the FPC assembly 3, the button body 41 drives the buckle 411 to move in the direction close to the FPC assembly 3, and in this situation, the buckle 411 is out of contact with the clamping piece 9. When the button body 41 loses the pressing force and moves in the direction away from the FPC assembly 3, the clamping piece 9 may be in contact with the buckle 411 to limit the button body 41 to the initial position.

Two buckles 411 are arranged on the button body 41, and two clamping pieces 9 are correspondingly arranged on the housing 1, so as to improve the stability of limiting the button body 41.

It should be noted that, although the clamping piece mounting groove 14 is arranged in the bottom of the housing 1, it does not affect the bonding between the housing 1 and the back cover 2. The bottom of the housing 1 has a first area and a second area, and the second area is closer to the outer peripheral side of the housing 1 than the first area, the first area is provided with a bonding surface for bonding with the back cover 2, and the second area or the junction of the first area and the second area is provided with the clamping piece mounting groove 14. In this way, when the accommodating groove is arranged in the first area, the width of the bonding surface at the accommodating groove becomes smaller, which affects the waterproof effect. Therefore, it is necessary to increase the width of the bonding surface to ensure the waterproof effect, resulting in an increase in the size of the intelligent terminal.

Further, a button mounting groove 16 in communication with the button penetration hole 11 is arranged on the outer peripheral side of the housing 1, and the button body 41 is arranged in the button mounting groove 16, and partially extends out of the button mounting groove 16.

It may be understood that, in the natural state, the button body 41 is located in the button mounting groove 16 and partially extends out of the button mounting groove 16, so that a hidden design of part of the button body 41 may be realized, and the button body 41 is prevented from exceeding the outer peripheral surface of the housing 1 too much to affect the aesthetics of the intelligent terminal.

Referring to Fig. 2 to Fig. 5, a mounting groove 13 in communication with the accommodating groove 12 is further formed in the inner peripheral side of the housing 1, so that the FPC assembly 3 is mounted into the accommodating groove 12 through the mounting groove 13.

It may be understood that, the arrangement of the mounting groove 13 provides a certain space for the installation of the FPC assembly 3, thereby facilitating the placement of the FPC assembly 3 into the accommodating groove 12.

Further, the mounting groove 13 and the accommodating groove 12 form a stepped groove. The intelligent terminal further includes a limiting piece 6, and the limiting piece 6 is arranged in the mounting groove 13 to limit the FPC assembly 3.

It may be understood that, the mounting groove 13 and the accommodating groove 12 form the stepped groove, the limiting piece 6 may be hidden by the mounting groove 13, and prevented from occupying the space inside the housing 1, and the FPC assembly 3 is limited by the limiting piece 6, so that the stability of the FPC assembly 3 is improved.

Exemplarily, in a specific implementation, referring to Fig. 4, a locking piece 8 with a locking hole 81 is arranged on the housing 1, a through hole is formed in the limiting piece 6, and the housing 1 and the limiting piece 6 are fixed by a fastener 7 passing through the through hole and extending into the locking hole 81. That is, the limiting piece 6 is fixed on the housing 1 through the cooperation between the fastener 7 and the locking piece 8. The locking hole 81 is a threaded hole, and the fastener 7 is a screw. At this time, the locking piece 8 may be embedded in the housing 1 or mounted on the housing 1.

Further, two locking pieces 8 and two fasteners 7 are arranged to ensure the stability of the limiting piece 6, thereby ensuring the stability of the button bracket 5.

Certainly, in another specific implementation, a locking hole may be arranged on the housing, for example, the locking hole is a threaded hole, and the threaded hole is directly processed on the housing. In this case, the arrangement of the locking piece may be omitted.

Referring to Fig. 2 to Fig. 5, the intelligent terminal further includes a button bracket 5, the button bracket 5 is arranged in the accommodating groove 12, and a limiting cavity 5a for limiting the FPC assembly 3 is arranged on the button bracket 5.

It may be understood that, by arranging the button bracket 5, the FPC assembly 3 may be limited by the limiting cavity 5a, which is beneficial to improving the stability of the FPC assembly 3 and facilitating the positioning when assembling the FPC assembly 3.

Specifically, the button bracket 5 includes a bracket body 51 and a buffer piece 52 arranged on the bracket body 51, the bracket body 51 and the buffer piece 52 enclose to form the limiting cavity 5a, and the buffer piece 52 is located on one side of the FPC assembly 3 close to the button penetration hole 11. The buffer piece 52 may play a buffer role when the button assembly 4 is pressed to trigger the FPC assembly 3, that is, buffer an action of the button assembly 4 triggering the FPC assembly 3, so as to prevent the service life of the FPC assembly 3 from being affected by long-term hard contact.

The buffer piece 52 may be selected as a silicone pad, and certainly, other materials that may play a buffer role may also be selected. In this situation, the buffer piece 52 is directly formed on the bracket body 51, for example, the buffer piece 52 is directly injection molded on the bracket body 51, so that the buffer piece 52 and the bracket body 51 are an undetachable integral piece, i.e. in an integral structure, the stability of the buffer piece 52 may be improved, and the buffer piece 52 is prevented from being separated from the bracket body 51 when being pressed for a long time.

Exemplarily, in a specific implementation, the bracket body 51 is a U-shaped structure, and the U-shaped structure has a middle bracket and two side brackets, the two side brackets are oppositely arranged in a first direction, the middle bracket is located between the two side brackets, the buffer piece 52 is connected to the two side brackets and is located on one side of the bracket body 51 in a second direction, and the second direction is perpendicular to the first direction, so that the limiting cavity 5a has openings in two directions, which is convenient for arranging the FPC assembly 3 in the limiting cavity 5a. Moreover, at this time, the middle bracket and the side brackets may play a role in limiting the FPC assembly 3, so that the FPC assembly 3 is stably located in the limiting cavity 5a.

Certainly, the bracket body may have a rectangular frame structure, and in this situation, the bracket body and the buffer piece enclose to form a limiting cavity with one opening, and the four side walls of the bracket body may limit the FPC assembly in two directions.

Referring to Fig. 4 and Fig. 5, the FPC assembly 3 includes an FPC body 31 and a trigger elastic piece 32 arranged on the FPC body 31, and in a natural state, the trigger elastic piece 32 abuts against the buffer piece 52. The trigger elastic piece 32 is configured to be deformed and triggered when being pressed by the button assembly 4, and when the button assembly 4 loses the pressing force, the force of the trigger elastic piece 32 to return to the original state drives the button assembly 4 to return to the initial position.

Certainly, the trigger elastic piece 32 may also be spaced from the buffer piece 52 by a preset distance in the natural state, so that the trigger elastic piece 32 may be buffered through the buffer piece 52 may first buffer and then be pressed by the button assembly 4.

It should be noted that, the limiting piece 6 is located on an inner side of the bracket body 51 and presses against the bracket body 51, so that the FPC assembly 3 is located between the limiting piece 6 and the buffer piece 52.

It may be understood that, the limiting piece 6 is located inside the bracket body 51 and presses against the bracket body 51, so that the bracket body 51 is fixed by the limiting piece 6, and the FPC assembly 3 may also be limited by the limiting piece 6, thereby improving the stability of the FPC assembly 3.

Exemplarily, referring to Fig. 2 to Fig. 5, taking the intelligent terminal as a mobile phone for an example, the mobile phone includes a housing 1, a back cover 2, a screen, an FPC assembly 3, a button assembly 4, a button bracket 5 and a limiting piece 6. The housing 1 is presented as an annular structure, the back cover 2 is arranged at the bottom of the housing 1 and is connected with the housing 1 in a sealing manner, the screen is arranged on the top of the housing 1 and is connected with the housing 1 in a sealing manner, and the button assembly 4 is located on one side of the mobile phone in the width direction.

The inner peripheral side of the housing 1 is provided with an accommodating groove 12 and a mounting groove 13 that are presented as a stepped groove, the button bracket 5 is arranged in the accommodating groove 12, and the bracket body 51 and the buffer piece 52 of the button bracket 5 enclose to form a limiting cavity 5a for accommodating the FPC assembly 3. The limiting piece 6 is connected to the housing 1 and located in the mounting groove 13, and the limiting piece 6 presses against the button bracket 5, so that the button bracket 5 is fixed relative to the housing 1. In this situation, the FPC assembly 3 is located between the limiting piece 6 and the buffer piece 52, and the FPC assembly 3 includes an FPC body 31 and a trigger elastic piece 32, and the trigger elastic piece 32 abuts against the buffer piece 52.

The button penetration hole 11 is formed in the outer peripheral side of the housing 1, and the button assembly 4 includes a button body 41 slidably arranged on the housing 1 and a button needle body 42 sealingly arranged in the button penetration hole 11. In a natural state, the button assembly 4 is in an initial position, and the button body 41 drives the button needle body 42 to move in a direction close to the FPC assembly 3 to trigger the FPC assembly 3 when being pressed. When the button body 41 loses the pressing force, the trigger elastic piece 32 drives the button needle body 42 to move in a direction away from the FPC assembly 3 to return to the initial position.

The bottom of the housing 1 has a first area and a second area, and the second area is closer to the outer peripheral side of the housing 1 than the first area, the first area is provided with a bonding surface for bonding with the back cover 2, and the clamping piece mounting groove 14 is arranged at the junction of the first area and the second area.

In this way, the accommodating groove 12 and the mounting groove 13 are formed in the inner peripheral side of the housing 1, and the FPC assembly 3 is limited by the limiting piece 6 and the button bracket 5, e.g. the FPC assembly 3 is accommodated in an enclosed space formed by the button bracket 5 and the limiting piece 6, so that the bottom of the housing 1 may be prevented from being perforated, thereby preventing the bonding area between the housing 1 and the back cover 2 from being affected, and being beneficial to reducing the width of the mobile phone and improving the user experience on the premise of ensuring the waterproof effect.

It should be noted that, in this paper, relational terms such as "first" and "second" are only used to distinguish one entity or operation from another entity or operation, and do not necessarily require or imply any actual relationship or order between these entities or operations. Moreover, terms "include", "include" or any other variation thereof are intended to cover non-exclusive inclusion, so that a process, method, object or device including a series of elements includes not only those elements, but also other elements not explicitly listed or elements inherent to such process, method, object or device. Without further restrictions, an element defined by a phrase "including a" does not exclude that there are other same elements in the process, method, object or device including the element.

The above descriptions are only specific embodiments of the present application, so that those skilled in the art may understand or implement the present application. Various modifications to these embodiments will be obvious to those skilled in the art, and general principles defined herein may be implemented in other embodiments without departing from the spirit or scope of the present application. Therefore, the present application will not be limited to these embodiments described herein, but rather to the widest scope consistent with the principles and novel features disclosed herein.

## Claims

1. An intelligent terminal, comprising:
a housing (1),
a back cover (2), which is arranged at a bottom of the housing (1) and is sealingly connected with the housing (1);
a flexible printed circuit (FPC) assembly (3); and
a button assembly (4),
wherein the housing (1) defines a button penetration hole (11) for the button assembly (4) to extend into on its outer periphery, and an accommodating groove (12) for accommodating the FPC assembly (3) on its inner periphery, and the accommodating groove (12) is in communication with the button penetration hole (11).

2. The intelligent terminal of claim 1, wherein the housing (1) further defines a mounting groove (13) in communication with the accommodating groove (12) on its inner periphery to allow the FPC assembly (3) to be mounted into the accommodating groove (12) through the mounting groove (13).

3. The intelligent terminal of claim 2, wherein the mounting groove (13) and the accommodating groove (12) form a stepped groove;
the intelligent terminal further comprises a limiting piece (6) connected to the housing (1), and the limiting piece (6) is arranged in the mounting groove (13) to limit the FPC assembly (3).

4. The intelligent terminal of claim 3, wherein a locking piece with a locking hole or a locking hole is arranged in the housing (1), a through hole is formed in the limiting piece (6), and the housing (1) and the limiting piece (6) are fixed by a fastener (7) passing through the through hole and extending into the locking hole.

5. The intelligent terminal of any one of claims 1-4, further comprising a button bracket (5),
wherein the button bracket (5) is arranged in the accommodating groove (12), and a limiting cavity (5a) for limiting the FPC assembly (3) is arranged in the button bracket (5).

6. The intelligent terminal of claim 5, wherein the button bracket (5) comprises a bracket body (51) and a buffer piece (52) arranged on the bracket body (51), and
the bracket body (51) and the buffer piece (52) enclose to form the limiting cavity (5a), and the buffer piece (52) is located on one side of the FPC assembly (3) close to the button penetration hole (11).

7. The intelligent terminal of claim 6, wherein the FPC assembly (3) comprises an FPC body (31) and a trigger elastic piece (32) arranged on the FPC body (31);
in a natural state, the trigger elastic piece (32) abuts against the buffer piece (52) or is spaced from the buffer piece (52) by a preset distance.

8. The intelligent terminal of claim 6 or 7, wherein the bracket body (51) and the buffer piece (52) are in an integrated structure.

9. The intelligent terminal of any one of claims 6-8, further comprising a limiting piece (6),
wherein the limiting piece (6) presses against the bracket body (51) to form a space for accommodating the FPC assembly (3).

10. The intelligent terminal of any one of claims 1-9, further comprising a screen,
wherein the screen is arranged at a top of the housing (1) and is sealingly connected with the housing (1); and
the housing (1), the screen and the back cover (2) enclose to form an accommodating space.

11. The intelligent terminal of any one of claims 1-10, wherein the button assembly (4) comprises a button body (41) slidably arranged on the housing (1) and a button needle body (42) sealingly arranged in the button penetration hole b(11), and
the button body (41) is configured to drive the button needle body (42) to move in the button penetration hole (11) to trigger the FPC assembly (3) when being pressed.

12. The intelligent terminal of claim 11, wherein the housing (1) further defines a button mounting groove (16) in its outer periphery, and the button mounting groove (16) is in communication with the button penetration hole (11), and the button body (41) is arranged in the button mounting groove (16), and partially extends out of the button mounting groove (16).

13. The intelligent terminal of any one of claims 1-12, wherein the FPC assembly (3) is configured to be mounted into the accommodating groove (12) from an inner side of the housing (1), which is different from a side where the back cover (2) is located.

14. The intelligent terminal of any one of claims 1-13, wherein the back cover (2) is not exposed through the accommodating groove (12).

15. The intelligent terminal of any one of claims 1-14, wherein the intelligent terminal is a mobile phone.
